# EUROPEAN PATENT SPECIFICATION

(11) **EP 4 284 537 B1**
(45) Date of publication and mention of the grant of the patent: **19.08.2026**
(21) Application number: 22703582.1
(22) Date of filing: 27.01.2022
(51) Int. Cl.: B01D 61/08, C02F 1/00, C02F 9/00, C02F 1/32, C02F 1/42

(54) **TAP-MOUNTED WATER PURIFICATION UNIT**
WASSERREINIGUNGSEINHEIT MIT HAHNANBRINGUNG
UNITÉ DE PURIFICATION D'EAU MONTÉE SUR UN ROBINET

(30) Priority: 28.01.2021 WO PCT/EP2021/052021
(43) Date of publication of application: 06.12.2023
(73) Proprietor: Omify AG, 6312 Steinhausen (CH)
(72) Inventor: MARK, Fabrizio, 8004 Zürich (CH); PIRMADJID, Bahar, 8004 Zürich (CH)
(74) Representative: E. Blum & Co. AG
(86) International application number: PCT/EP2022/051914
(87) International publication number: WO 2022/162070

(56) References cited:
- WO-A1-2011/016514
- DE-A1- 102020 106 940
- KR-A- 20130 106 995
- US-A1- 2003 042 201
- US-A1- 2010 006 508
- US-A1- 2017 136 412
- US-A1- 2019 193 007
- US-B1- 9 422 173
- US-B2- 7 267 769
- US-B2- 7 862 710

## Description

### Technical Field

The invention relates to a water purification unit having a tap interface and a membrane filter.

### Related applications

This application claims priority of international patent application PCT/EP2021/052021 filed 28 January 2021.

### Background Art

Membrane filter devices use a partially permeable membrane to separate ions, unwanted molecules, and larger particles from drinking water. Water pressure is used to overcome osmotic pressure. Membrane filters can remove many types of dissolved and suspended chemical species as well as biological ones from water.

Purification units having a tap interface can be connected to a water tap and e.g. to be mounted thereto. In contrast to large-scale industrial devices, such units can e.g. be used to purify smaller amounts of water in a household.

WO 2011/016514A1 describes a filter assembly having a pore filter, an activated carbon filter, and a membrane filter. US7267769 discloses an activated carbon pre-filter, a membrane filter, and a post-filter. US2019/193007 relates to a filter assembly with prefilters and antimicrobial membrane filters located in the same hosuing.

### Disclosure of the Invention

The problem to be solved by the present invention is to provide a compact water purification unit of this type with good purification performance that is easy to use.

This problem is solved by the unit of claim 1.

Accordingly, the invention relates to a water purification unit having at least the following elements:
- A tap interface: This is an interface adapted to be connected to a water tap and to receive water therefrom. Advantageously, it is adapted to provide a rigid mechanical connection to the tap that is suited to bear the weight of the filter unit (and the water therein) in operation. Alternatively, though, it may also be a flexible interface comprising e.g. a tube connector as well as a tap adapter.
- A membrane filter: This filter is arranged around a central duct, and this duct extends along the filter axis. The central duct is advantageously a duct feeding water from the reverse-osmosis filter to the post-filter (mentioned below), but it may also be a duct feeding water from the pre-filter (mentioned below) to the membrane filter. The membrane filter is advantageously a reverse-osmosis filter, but it may also be any other type of membrane filter, such as a nanofilter.
- A pre-filter arranged before the membrane filter: In this context, the term "before" indicates that the purification unit is adapted to guide water from the tap interface through the pre-filter and only then then through the membrane filter, i.e. "before" is the same as "upstream". The unit may comprise several such pre-filters.
- A post-filter arranged after the membrane filter: In this context, the term "after" indicates that the purification unit is adapted to first guide water through the membrane filter and then through the post-filter, i.e. "after" is the same as "downstream". The unit may comprise several such post-filters.
- An outlet port: This is the exit port for purified water. It is advantageously connected via an outlet duct to the exit side of the post-filter.

Advantageously, at least two of the filters are arranged at different locations along the filter axis. Being "arranged at different locations along the filter axis" is to be understood such that, along the filter axis, the two filters overlap not at all or only partially, and that they both surround the filter axis.

Advantageously, all three of these filters are arranged at different locations along the filter axis, thereby providing a compact design. In other words, along the filter axis, the three filters overlap not at all or only partially, and they all surround the filter axis.

The unit may have at least one housing, wherein the membrane filter, the pre-filter, and the post-filter are arranged in the housing to form a unit.

Advantageously, the housing extends along the filter axis and has first and second opposing ends. A first lid closes the first end and/or a second lid closes the second end, with the lid(s) being removably mounted to the housing. This allows to open the housing from one or, advantageously, both ends for better maintenance.

In particular, upon removing one (or, advantageously, both) of the lids, all the filters may be removed from the housing in axial direction, e.g. for cleaning or replacement.

Advantageously, the housing is cylindrical and concentric to the filter axis.

The unit may further have a pre-filter module comprising the pre-filter and a post-filter module comprising the post-filter. With the lid(s) closed, a first one of these modules abuts against the first lid or against an end of the housing for being held in place.

In that case, the second one of the modules may be located between the first module and the membrane filter for being held in place, too.

Advantageously, the unit comprises a valve selectively blocking the water passage through the unit.

This valve may e.g. be controlled by a timer and/or by remote control.

In other embodiments (not claimed), a non-coaxial design is used. This design has several variants, such as:
A) The membrane filter and the post-filter are arranged in a first assembly at different locations along the filter axis and the pre-filter is arranged in a second assembly laterally offset from the filter axis; or
B) The membrane filter and the pre-filter are arranged in the first assembly at different locations along the filter axis and the post-filter is arranged in the second assembly laterally offset from the filter axis.
C) The three filters are arranged in separate assemblies, with none of them being coaxial to another one.

This design allows to use larger filters for higher-throughput water purification without making the unit too long.

The invention also refers to the use of the water purification unit comprising the steps of
connecting the tap interface to a tap and
sequentially feeding water from the tap first through the pre-filter, then through the membrane filter, and then through the post-filter.

### Brief Description of the Drawings

The invention will be better understood and objects other than those set forth above will become apparent when consideration is given to the following detailed description thereof. Such description makes reference to the annexed drawings, wherein:
Fig. 1 is a sectional view of a first embodiment of a water purification unit,
Fig. 2 is the unit of claim 1 with arrows representing the liquid flow,
Fig. 3 is a sectional view of a second embodiment,
Fig. 4 show is a functional block diagram of the valve module of the embodiment of Fig. 3,
Fig. 5 is a sectional view of a third embodiment,
Fig. 6 is a sectional view of a fourth embodiment (not claimed),
Fig. 7 is a top view of a fifth embodiment (not claimed),
Fig. 8 is a side view of the fifth embodiment (not claimed),
Fig. 9 is a top view of a sixth embodiment (not claimed),
Fig. 10 is a side view of the sixth embodiment (not claimed),
Fig. 11 is a view of a seventh embodiment with its two lids being unscrewed and at a distance from each other,
Fig. 12 is a sectional view of the seventh embodiment, and
Fig. 13 shows an eighth embodiment.

### Modes for Carrying Out the Invention

### Definitions

The end of the purification unit carrying the tap interface is defined to be the "top" end of the unit. Hence, terms such as "above" and "below" are to be interpreted in this reference frame irrespective of how the unit is actually mounted in respect to the direction of gravity.

The "horizontal" or "lateral" direction is the direction perpendicular to the filter axis.

A "membrane filter" is advantageously a filter using a partially permeable membrane. The membrane is permeable to water but withholds at least some of the contaminants that may be solved in water. Advantageously, it is one of the following variants:
- A nanofilter: A nanofilter uses a membrane having a pore size between 1 and 10 nanometers, see e.g. https://en.wikipedia.org/wiki/Nanofiltration.
- A reverse osmosis filter: Reverse osmosis involves solvent diffusion across a membrane that is either nonporous or uses nanofiltration with pores of approximately 1 nm or less in size, see e.g. https://en.wikipedia.org/wiki/Reverse_osmosis.
- A "pre-filter" is advantageously understood to be a pre-treatment unit for the water.
- A "post-filter" is advantageously understood to be a post-treatment unit for the water.
- A "sediment filter" is advantageously understood as a mechanical filter having filter pores of a diameter of less than 100 µm, in particular of less than 10 µm.

### General elements and first embodiment

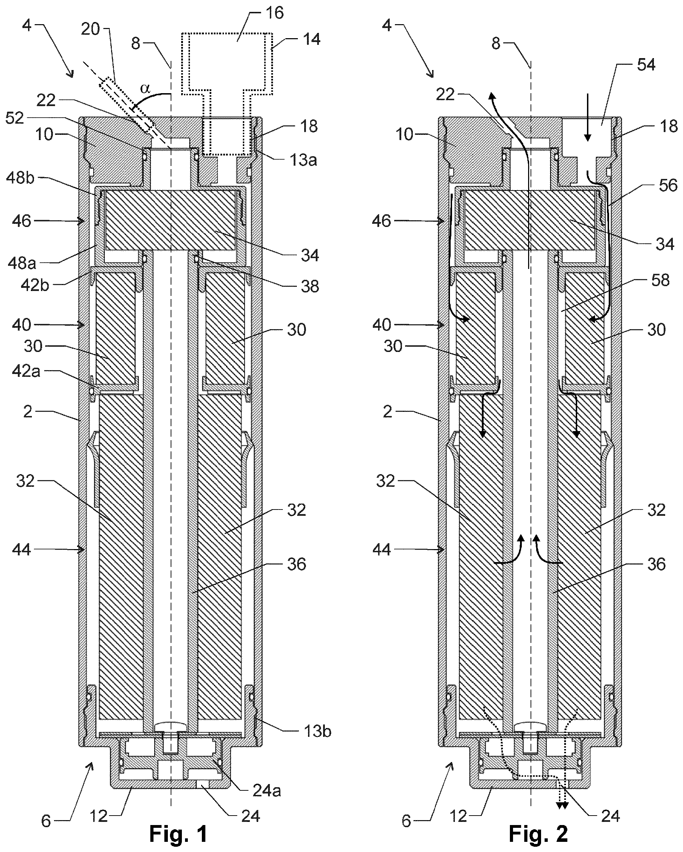

Figs. 1 and 2 shows a first embodiment of the purification unit. This embodiment also shows general features of the device that can be used in other embodiments.

The purification unit of Figs. 1 and 2 comprises a cylindrical housing 2 having a first end 4 and a second end 6. Housing 2 is concentric to a filter axis 8.

In the present embodiment, it comprises a first lid 10 inserted into first end 4 and a second lid 12 inserted into second end 6. Both lids 10, 12 are releasably connected to housing 2, in particular by means of first engaging structures arranged at the outer side of the lids 10, 12 and second engaging structures arranged at the inner side of housing 2. Such engaging structures may e.g. form threads or, as shown, elastic snap-in connections 13a, 13b.

A tap interface 14 is mounted at first end 4. It e.g. comprises a seat 16 to receive a water tap, e.g. using an elastic fitting, thread, or clamping mechanism (not shown) to create a firm connection with the tap.

An outlet port 20 is mounted at first end 4. It acts as an exit for the purified water. It may e.g. form a spout or a connector for a tube.

A concentrate drain 24 is arranged on second end 6 of the unit. It is used to drain concentrated waste water from the unit as described below.

The purification unit generally comprises at least three filters: a pre-filter 30, a membrane filter 32, and a post-filter 34. The membrane filter is advantageously a reverse-osmosis filter. Hence, in the following description, it will be called a reverse-osmosis filter even though it may also be any other type of membrane filter, in particular a nanofilter.

Pre-filter 30 is located in the flow path before reverse-osmosis filter 32, i.e. it is arranged in the flow path between tap interface 14 and reverse-osmosis filter 32.

Post-filter 34 is located in the flow path after reverse-osmosis filter 32, i.e. it is arranged in the flow path between reverse-osmosis filter 32 and outlet port 20.

Pre-filter 30 is advantageously an activated carbon filter, e.g. to trap organic chemicals and chlorine that may damage the membrane of reverse-osmosis filter 32. It may, however, also be or include a zeolite filter, a UV filter, a sediment filter, a micro-filter (https://en.wikipedia.org/wiki/Microfiltration), and/or an ultra-filtration filters (https://en.wikipedia.org/wiki/Ultrafiltration).

Post-filter 34 is advantageously also an activated carbon filter, e.g. to trap substances not removed by the reverse osmosis membrane. It may, however, also be or include a zeolite filter, a UV filter, a ceramic filter, a deionization filter (i.e. a filter for removing ions from water), and/or a remineralization unit.

In this context, a remineralization unit, which is advantageously located after the reverse-osmosis filter, is a unit adapted to add ions to the water that are desirable in the water, such as potassium, manganese, and/or calcium ions and/or silicates. It may also add trace minerals, such as iron, zinc, and phosphorus. It may e.g. comprise ground sea shells and/or ground natural minerals. Such a remineralization unit is considered to be a "filter" in the present context.

Post-filter 34 may also regulate pH, TDS, taste, and/or molecular composition (e.g. by converting part of the water to H₃O₂⁻, commonly known as water structuring). It may also be adapted to increase the oxygen saturation of the filtered water, e.g. by using a vortex and/or water whirling device as described in WO2012168093A1.

Reverse-osmosis filter 32 comprises a semi-permeable membrane as known to the skilled person. It e.g. is wound around a central duct 36.

In the shown embodiment, central duct 36 forms the exit from reverse-osmosis filter 32.

It extends along filter axis 8 and is advantageously concentric thereto. In the region of reverse-osmosis filter 32, it comprises perforations (now shown in the figures) that allow the water to pass.

In the shown embodiment, central duct 36 extends upwards from reverse-osmosis filter 32 to post-filter 34. Advantageously, top end 38 of central duct 36 ends at post-filter 34.

Central duct 36 extends through pre-filter 30, i.e. pre-filter 30 has annular shape and is arranged around central duct 36.

Bottom end 40 of central duct 36 abuts against second lid 12.

In the shown embodiment, pre-filter 30 is geometrically arranged between reverse-osmosis filter 32 and post-filter 34. Post-filter 34 is geometrically arranged between pre-filter 30 and first lid 10. Osmosis filter 32 is geometrically arranged between pre-filter 30 and second lid 12.

Hence, as can be seen, post-filter 34 is arranged below first lid 10. Pre-filter 30 is arranged below post-filter 34. Reverse-osmosis filter 34 is arranged below pre-filter 30. And second lid 12 is arranged below reverse-osmosis filter 34.

The filters are designed as modules:
- A pre-filter module 40 comprises pre-filter 30 as well as a pre-filter frame 42a, 42b. Pre-filter frame 42a, 42b may e.g. be of a rigid polymer or metal. It provides a mechanical interface to position pre-filter 30 within the unit.
- A reverse-osmosis filter module 44 comprises reverse-osmosis filter 32 as well as central duct 36. Central duct 36 may e.g. be of a rigid polymer or metal. Again, it provides a mechanical interface to position reverse-osmosis filter 32 within the unit.
- A post-filter module 46 comprises post-filter 34 as well as a post-filter frame 48a, 48b. Post-filter frame 48a, 48b may e.g. be of a rigid polymer or metal. It provides a mechanical interface to position post-filter 34 within the unit.

When the unit is assembled and the two lids 10, 12 are closed, the modules 40, 44, 46 axially abut against each other and are kept together by the compressive forces exerted by the lids 10, 12.

When the lids 10, 12 are opened, the modules 40, 44, 46 can be axially and, advantageously individually, be removed from the unit.

Advantageously, Post-filter frame 48a, 48b encloses post-filter 34 and forms an axial inlet port 50 for receiving central duct 36 and/or an axial outlet port 52 for being connected to first lid 10.

Fig. 2 illustrates the water flow in the unit.

As can be seen, water flows from tap interface 14 through an inlet port 54 that forms the recess 18 receiving the tap interface.

It then flows around post-filter 34, e.g. through an e.g. cylindrical gap 56 between post-filter module 46 and housing 2, through suitable channels or gaps in the periphery of pre-filter frame 42b (not shown), and arrives at pre-filter 30.

It radially flows through pre-filter 30 towards filter axis 8 and reaches an annular space 58 between pre-filter 30 and central duct 36.

From there, it flows down into reverse-osmosis filter 32.

Part of the water is drained off as concentrated waste liquid through the bottom end of osmosis filter 32 and leaves the unit through concentrate drain 24 in second lid 12.

Drain 24 comprises a drain inset 24a, which may e.g. provide space and a mount for drain tubing. Drain inset 24a may be connected to housing 2, in particular to bottom lid 12, as shown in Fig. 1, or it may be connected to central duct 36 as shown in the seventh embodiment below.

Purified water leaves reverse-osmosis filter 32 through the openings (not shown) in central duct 36. It rises through central duct 36 to arrive at post-filter 34.

The water then passes through post-filter 34 and leaves the unit through an exit duct 22 of first lid 10.

### Second embodiment

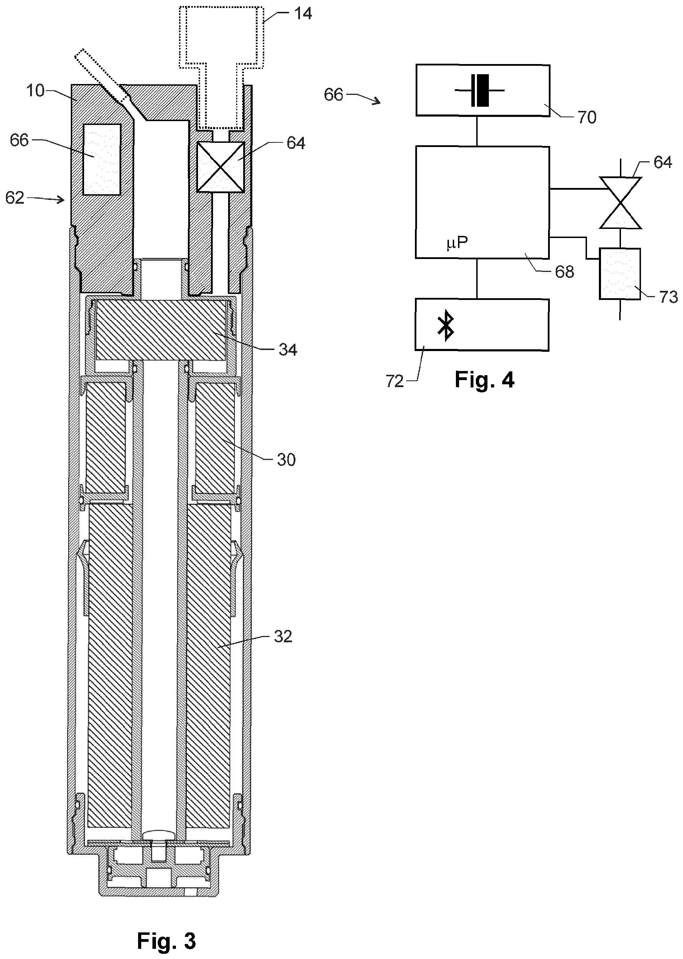

Fig. 3 shows a second embodiment of the unit.

It differs from the first embodiment by having a valve module 62 with a valve 64. Valve 64 is structured to close the water flow through the unit. It may e.g. be a flow-control valve with an on-state and an off-state. Such valves are known to the skilled person.

Valve 64 is advantageously arranged in the flow path between tap interface 14 and pre-filter 30.

In the shown embodiment, valve 64 is geometrically arranged above the filters. In particular, pre-filter 30 and the post-filter 34 are axially located between reverse-osmosis filter 32 and valve 64.

For example, valve 64 may be incorporated into first lid 10 (as shown), or valve module 62 may be a module separate from first lid 10 and located within housing 2 below first lid 10. Valve module 62 may also form part of tap interface 14.

Valve module 62 comprises a valve control 66 for controlling valve 64.

In one embodiment, valve control 66 may be an electronic control as e.g. shown in Fig. 4.

Such an electronic control may e.g. comprise a control processor 68, such as a microprocessor, and a power supply 70, such as a battery.

Valve control 66 may also comprise a wire-bound or (advantageously) wireless interface 72, such as a Bluetooth interface.

Valve control 66 may also comprise a flow meter 73 adapted to measure the volumetric water flow through the unit.

Valve control 66 may e.g. be equipped to operate valve 64 in at least one of the following modes:
- It may control valve 64 in a timer mode to open and close it at certain times, e.g. at certain times of a day.
- It may control valve 64 on request, e.g. in response to a request received through interface 72.
- It may control valve 64 in response to payment conditions. For example, it may comprise a credit counter deducted against the flow of water through the unit as measured by flow meter 72.

Valve control 66 may also comprise networking capability, e.g. through interface 72, for connecting to an IoT-network, e.g. for exchanging usage data with a central server, such as for automatic replacement part shipping or user notification when the filters are exhausted.

In another embodiment, valve control 66 may also be a mechanical control, e.g. operated by a user interface element, such as a lever or knob, and/or operated by a spring-powered mechanical timer.

### Third embodiment

In the first and second embodiment, pre-filter 30 is geometrically arranged between post-filter 34 and reverse-osmosis filter 32.

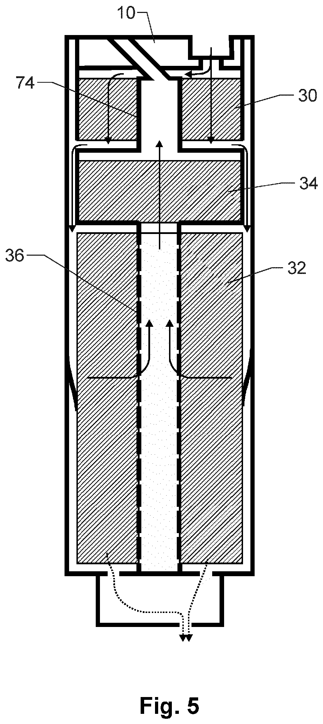

Fig. 5 schematically shows an alternative embodiment, where the positions of the pre-filter and the post-filter are reversed. Here, post-filter 34 is arranged between pre-filter 30 and reverse-osmosis filter 32. The water from pre-filter 30 e.g. flows around post-filter 34 to arrive at reverse-osmosis filter 32. From there, purified water rises through central duct 36, with central duct 36 ending at post-filter 34. From post-filter 34, the water rises through a duct section 74 located in a central opening in pre-filter 30 and from there to first lid 10.

The third embodiment may also be provided with a valve module such as e.g. shown from the second embodiment.

### Fourth embodiment (not claimed)

In the embodiments shown so far, pre-filter 30, reverse-osmosis filter 32, and post-filter 34 are arranged coaxially at different axial locations along filter axis 8.

In another embodiment, only one of pre-filter 30 and post-filter 34 may be arranged coaxially with reverse-osmosis filter 32, while the other one of pre-filter 30 and post-filter 34 is arranged laterally offset from filter axis 8.

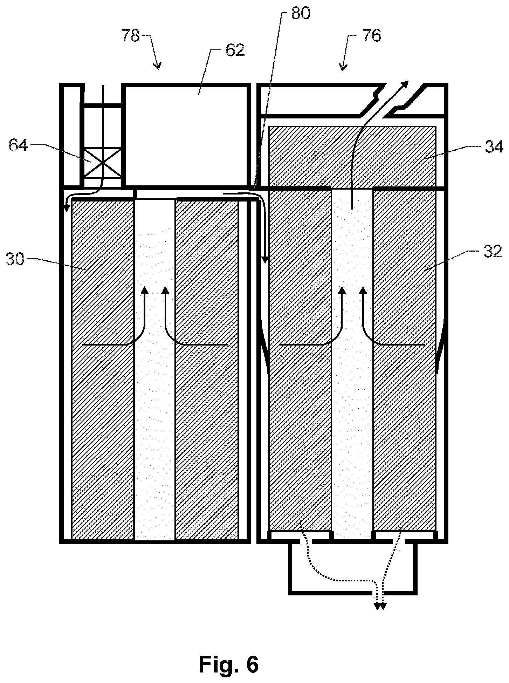

Such an embodiment is shown in Fig. 6.

Here, reverse-osmosis filter 32 and post-filter 34 are arranged coaxially in a first assembly 76, advantageously with post-filter 34 being located above reverse-osmosis filter 32.

Pre-filter 30 is arranged horizontally in a second assembly 78 laterally beside reverse-osmosis filter 32 and/or post-filter 34.

A valve module 62 with valve 64 may e.g. be located above pre-filter 30.

An interconnect duct 80 connects the assemblies 76, 78 and is provided for guiding the water from pre-filter 30 to reverse-osmosis filter 32.

The tap interface (not shown in Fig. 6) is advantageously arranged on first assembly 78 while the outlet port is arranged on second assembly 76.

The design of Fig. 6 allows to use larger filter volumes without making the unit exceedingly long.

Alternatively to the design shown in Fig. 6, the locations of pre-filter 30 and post-filter 34 may be swapped. In other words, pre-filter 30 and reverse-osmosis filter 32 may be arranged coaxially in the first assembly 76 and post-filter 34 may be arranged in the second assembly 78, which provides a larger volume for post-filter 34.

In that case, the tap interface is advantageously arranged on second assembly 76 while the outlet port is arranged on first assembly 78.

In yet another embodiment, the tap interface may be arranged between the first and second assemblies 76, 78, such as shown in US 47313175.

### Fifth embodiment (not claimed)

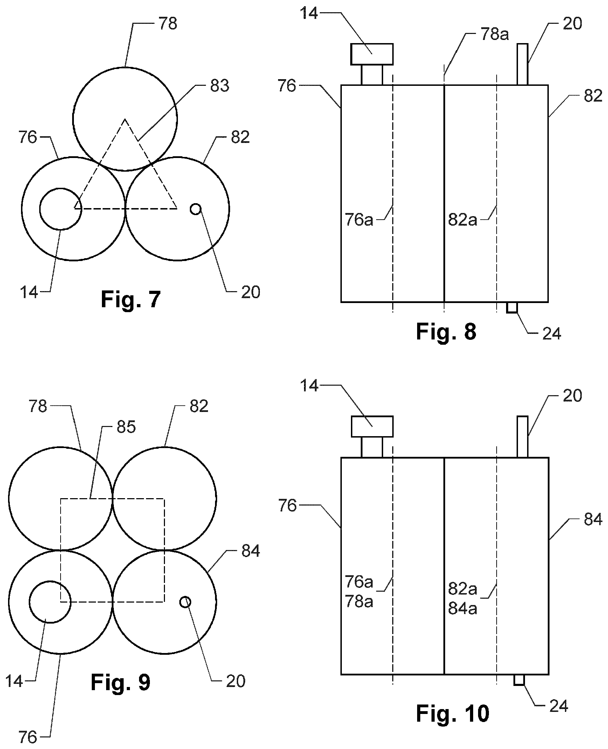

Figs. 7 and 8 show a fifth embodiment of the unit. In this embodiment, the unit comprises three assemblies 76, 78, 82, with one containing pre-filter 30, another one containing membrane filter 32, and a third one containing post-filter 34.

For example, pre-filter 30 may be arranged in first assembly 76, membrane filter 32 in second assembly 78 (with brine outlet 24 also being arranged on second assembly 78), and post filter 34 in third assembly 82.

In the shown embodiment, tap interface 14 is mounted to first assembly 76 and outlet port 20 to third assembly 82.

Any of the assemblies, in particular first assembly 76, may also comprise a valve unit and/or control unit and/or sediment filter as described above.

However, tap interface 14 may also be arranged elsewhere, e.g. be in the center of the unit.

Advantageously, and as can be seen, all assemblies 76, 78, 82 are elongate, with their longest axes 76a, 78a, 82a being parallel to each other in order to provide a compact design.

Advantageously, the assemblies 76, 78, 82 are, when seen from above (i.e. from the side of the tap interface), arranged on a polygon and not on a line, which again renders the design more compact. For example, as shown in Fig. 7, they are arranged on a triangle, in particular an equilateral triangle, 83.

### Sixth embodiment (not claimed)

Figs. 9 and 10 show a sixth embodiment of the unit. In this embodiment, the unit comprises four assemblies 76, 78, 82, 84, with one containing pre-filter 30, another one containing membrane filter 32, and a third one containing post-filter 34. The fourth assembly may e.g. contain the valve unit and/or a sediment filter and/or a control unit.

For example, the valve unit and its control unit may be arranged in first assembly 76, pre-filter 30 may be arranged in second assembly 78, membrane filter 32 in third assembly 82 (with brine outlet 24 also being arranged on third assembly 82), and post filter 34 in fourth assembly 84.

In the shown embodiment, tap interface 14 is mounted to first assembly 76 and outlet port 20 to fourth assembly 84.

Again, however, tap interface 14 may also be arranged elsewhere, e.g. in the center of the unit.

Advantageously, and as can be seen, all assemblies are again elongate, with their longest axes 76a, 78a, 82a being parallel to each other in order to provide a compact design.

Advantageously, the assemblies 76, 78, 82 are, when seen from above, arranged on a polygon and not on a line, which again renders the design more compact. For example, as shown in Fig. 9, they are arranged on a rectangle, in particular on a square, 85.

Advantageously, the expression "arranged on a polygon" is to be understood such that, when seen from above (i.e. from the side of the tap interface), the centers of the assemblies are arranged on a polygon.

In more general terms, and as shown in the fifth and sixth embodiment, the unit may have at least three assemblies, in particular at least four assemblies, 76, 78, 82, 84, with the pre-filter, the membrane filter, and the post filter being arranged in different assemblies. The assemblies may be arranged on a polygon, in particular a regular polygon such as triangle 83 or rectangle 85, e.g. when seen from the side of tap interface 14.

Advantageously, the assemblies have elongate directions 76a, 78a, 82a, 84a (defined by their central axes) describing their longest extension, with the elongate directions being parallel to each other.

In particular, each assembly has a housing that is rotationally symmetric about its elongate direction, e.g. by having a cross section - perpendicular to the elongate direction - that has the shape of an oval, circle, or regular polygon centered on the elongate direction. This results in a particularly compact design.

To simplify the manufacturing of the unit, all housings of the assemblies may have the same shape.

### Seventh embodiment

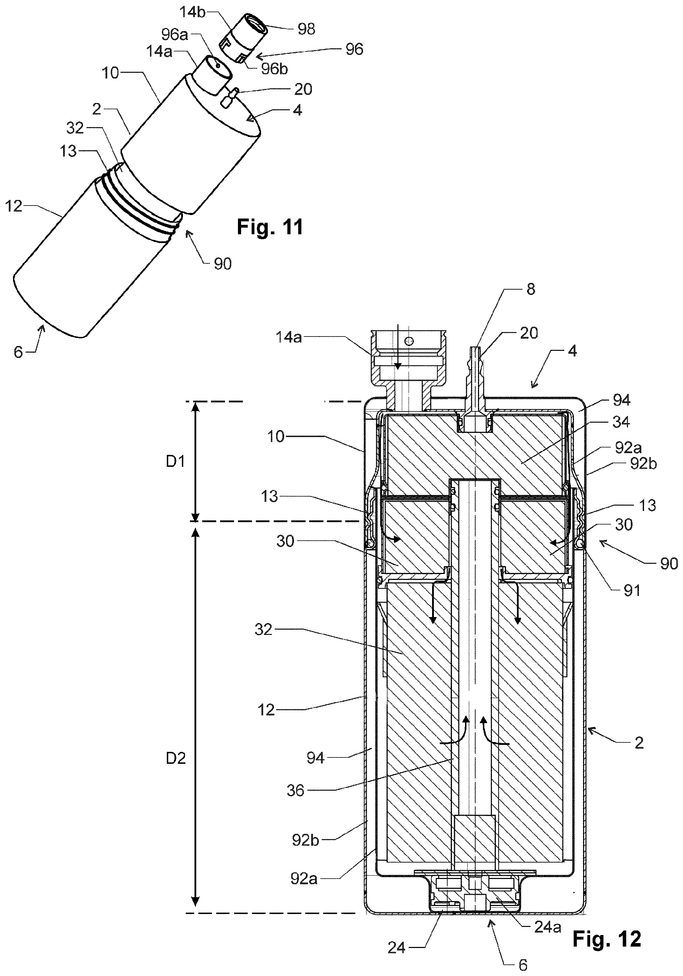

The seventh embodiment shown in Figs. 11 and 12 has the same arrangement of pre-filter 30, membrane filter 32, and post-filter 34 in a housing 2 as the first embodiment.

The unit has a first lid 10 at its first end 4 as well as a second lid 12 and its second end 6.

In this embodiment, however, first lid 10 and second lid 12 form the housing 2 of the unit, and they are directly connected to each other. This makes it easy to assemble and disassemble the housing.

Advantageously, first lid 10 and second lid 12 form a threading 13 between them.

As shown, the two lids are advantageously cup-shaped for receiving the innards of the filter unit between them.

The two lids meet at a location 90 between the first end 4 and the second end 6.

Advantageously, location 90 is approximately half way between the first and the second ends 4, 6 in the sense that the ratio D1:D2 is between 0.25 and 4.0, with D1 being the distance between first end 4 and location 90 and D2 being the distance between second end 6 and location 90 (see Fig. 12). This design results in the first and second lids being shallower than a design where location 90 is close to first or second end 4, 6, which makes it easier to remove and insert the filter components.

Fig. 12 shows another advantageous element of the filter unit that can also be employed for any of the other embodiments shown herein.

As shown, each lid 10, 12, and therefore housing 2, comprises an inner wall 92a and an outer wall 92b located at a distance from each other. A cavity 94 is formed between inner wall 92a and outer wall 92b.

This design reduces the weight of the housing.

Advantageously, inner wall 92a and outer wall 92b are formed by stainless steel sheets. In this case, the two-wall design allows manufacturing the housing by deforming the metal sheets. In contrast to this, single-walled housing of the same stability would be much heavier and require milling to form the metal parts.

This design allows for increased external attachment of components due to more material available

In addition, the double-walled design reduces the thermal conductivity of the housing as compared to a single-walled housing. This is particularly advantageous when filtering very cold water because it reduces condensation on the outer surfaces of the filter unit.

The connection at location 90 can e.g. be formed by any type of suitable threading or by a bayonet mount, advantageously with an additional sealing member 91 to provide a watertight seal.

Note that, in the shown embodiments, both lids 10, 12 of the housing are made of double-walls of stainless steel. However, one or both of the lids 10, 12 may also be of another material, such as plastics, e.g. when circuitry within the filter unit needs RF connection to an outside device.

Figs. 11 and 12 show yet another aspect that can be used in combination with any of the other embodiments shown here.

As shown, tap interface 14 includes a first part 14a and a second part 14b, with first part 14a being connected to housing 2. First part 14a and second part 14b each comprise recesses 96a and/or projections 96b that, together, form a bayonet mount. Further, second part 14b comprises a threading 98, for connecting it to a tap. Depending on the tap to be mounted to, threading 98 may be an interior threading or an exterior threading.

Instead of a bayonet mount, any other quick connect mechanism could be used as well as e.g. regular threading.

Hence, second part 14b can be screwed permanently onto the tap, and then first part 14a and therefore housing 2 can be easily mounted thereto and removed therefrom by means of bayonet mount 96.

In other words, tap interface 14 advantageously comprises a first part 14a mounted to housing 2 and a second part 14b having a threading 98, which first and second parts 14a, 14b form a water tight bayonet mount 96.

A set of different second parts 14b may be provided, which differ in the diameter of threading 98 and/or its exposition (interior threading or exterior threading). These second parts 14b form adapters suitable for different tap types.

The embodiment of Fig. 12 further shows that drain inset 24a is connected to central duct 25 and not to housing 2 such that it can easily be removed from the housing together with the filter assembly. It advantageously rests in a recess 24b at the bottom of housing 2.

### Eighth embodiment

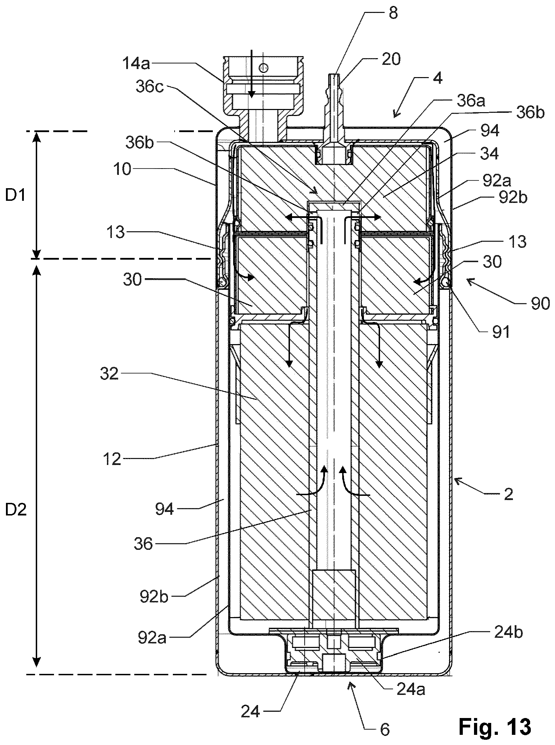

The eighth embodiment shown in Fig. 13 corresponds to the seventh embodiment with the exception that central duct 36 axially (i.e. along central axis 8) extends into post-filter 34 and is closed at its axial end 36a. It further comprises radial water outlet ports 36b for providing a passage of water into post-filter 34. This allows to more evenly distribute the water flow through post-filter 34 than using an axial outlet port as shown in other embodiments.

Hence, advantageously, a first end 36c of central duct 36 extends axially into post-filter 34. At the first end 36c, central duct 36 is axially closed and comprises radial outlet openings 36b.

The radial outlet openings 36b connect the interior of central duct 36 to post-filter 34.

### Notes

In the embodiments above, housing 2 is cylindrical. It may, however, also have another cross section, e.g. a square cross section, oval cross section, or polygonal cross section. Its cross section may also vary along the filter axis. A cylindrical cross section is advantageous, though, because it is easier to manufacture and withstands higher pressure.

As mentioned, the unit may also comprise a single lid only, in particular the lid at the bottom end. In that case, the other end of the housing would be closed permanently.

It must be noted that tap interface 14 is only shown in Figs. 1 and 3, but advantageously all the embodiments may be equipped with such a tap interface.

In the embodiment above, tap interface 14 creates a firm, rigid connection with the tap. Alternatively, tap interface may e.g. comprise a flexible tube and a tap adapter, with the tap adapter being designed to form a mechanical interface with the tap. In this case, the unit can e.g. be placed on a support beside the tap while it is connected to the adapter by means of the tube.

Advantageously, tap interface 14 is arranged in or on first lid 10. In the embodiment of Fig. 1, it is e.g. mounted to a recess 18 in lid 10. It may also form an integral part of first lid 10.

Similarly, outlet port 20 is only shown in Figs. 1 and 3, but advantageously all the embodiments may be equipped with such an outlet port.

Advantageously, outlet port 20 is arranged in or on first lid 10. In the embodiment of Fig. 1, it is e.g. mounted to a recess 22 in lid 10. It may also form an integral part of lid 10 or of housing 2 if lid 10 is an integral part of the housing.

Advantageously, outlet port 20 is formed by a duct section projecting from the unit as shown in Fig. 1. The angle α between filter axis 8 and outlet port 20 is advantageously larger than 0° and smaller or equal to 90°. This allows outlet port 20 to be mounted to the end surface of first lid 10 and to be e.g. connected to a tube without colliding with the tap or tap interface 14.

Advantageously, but not necessarily, angle α is smaller than 90°, in particular between 15° and 75°.

As mentioned, the pre-filter and/or post-filter may combine several functions. For example, pre-filter 30 may comprise a sediment filter and an activated carbon filter. The several functions may be combined in one structural unit (such as an activated carbon filter having a layer acting as a sediment filter e.g. at its input surface(s)), or the filter may comprise several structurally separate units (such as one unit acting as a sediment filter and another unit acting as an activated carbon filter). The same applies to post-filter 34.

While there are shown and described presently preferred embodiments of the invention, it is to be distinctly understood that the invention is not limited thereto but may be otherwise variously embodied and practiced within the scope of the following claims.

## Claims

1. A water purification unit comprising
a housing (2),
a tap interface (14) adapted to be connected to a water tap and to receive water therefrom,
a membrane filter (32) arranged around a central duct (36) extending along a filter axis (8),
a pre-filter (30) arranged before the membrane filter (32), and
a post-filter (34) arranged after the membrane filter (32), and
an outlet port (20),
wherein the purification unit is adapted to first guide water through the membrane filter and then through the post-filter,
**characterized in that**
the membrane filter (32), the pre-filter (30), and the post-filter (34) are arranged in the housing (2),
said central duct (36) extends from the membrane filter (32) to the post-filter (34), and
the post-filter (34) is geometrically arranged between the tap interface (14) and the membrane filter (32).

2. The unit of claim 1 wherein at least two of the filters (30, 32 34) are arranged at different locations along the filter axis (8) such that, along the filter axis (8), the two filters (30, 32 34) overlap not at all or only partially, and that they both surround the filter axis (8).

3. The unit of claim 2 wherein the pre-filter (30), the post-filter (34), and the membrane filter (32) are arranged at different locations along the filter axis (8) such that, along the filter axis (8), the pre-filter (30), the post-filter (34), and the membrane filter (32) overlap not at all or only partially, and they all surround the filter axis (8).

4. The unit of claim 3 wherein the pre-filter (30) is geometrically arranged between the membrane filter (32) and the post-filter (34).

5. The unit of any of the preceding claims wherein the central duct (36) extends into the post-filter (34).

6. The unit of any of the preceding claims wherein the pre-filter (30) is arranged around the central duct (36).

7. The unit of any of the preceding claims wherein the post-filter (34) is geometrically arranged between the tap interface (14) and the pre-filter (30).

8. The unit of any of the preceding claims wherein the housing is cylindrical and concentric to the filter axis (8).

9. The unit of any of the preceding claims wherein the housing (2) extends along the filter axis (8) and has first and second opposing ends,
wherein the unit further comprises a first lid (10) closing the first end and/or a second lid (12) closing the second end,
wherein the first and/or the second lids (10, 12) is/are removably mounted to the housing (2).

10. The unit of claim 9, wherein the lid(s) (10, 12) is/are inserted into the ends of the housing (2).

11. The unit of any of the claims 1 to 8 wherein the housing (2) extends along the filter axis (8) and has first and second opposing ends, and wherein the housing (2) comprises
a first lid (10) at the first end and a second lid (12) at the second end,
wherein the first lid (10) at the second lid (12) are directly connected to each other,
and in particular wherein the first lid (10) and the second lid (12) are cup-shaped.

12. The unit of claim 11 wherein the first lid (10) and the second lid (12) meet at a location (90) and wherein a ratio D1:D2 is between 0.25 and 4.0, with D1 being a distance between the first end (4) and the location (90) and D2 being a distance between the second end (6) and the location (90).

13. The unit of any of the claims 9 to 12 wherein, upon removing one or both of the lids (10, 12), all the filters can be axially removed from the housing (2).

14. The unit of any of the claims 9 to 13 wherein the tap interface (14) and the outlet port (20) are arranged in or on the first lid (10).

15. The unit of any of the claims 9 to 14 further comprising a pre-filter module (40) comprising the pre-filter (30) and a post-filter (34) module (46) comprising the post-filter (34), wherein, with the lid(s) (10, 12) closed, a first one of said modules abuts against the first lid (10) and/or an end of the housing (2).

16. The unit of claim 15 wherein a second one of the modules is located between the first module and the membrane filter (32).

17. The unit of any of the claims 9 to 16 wherein, with the lids (10, 12) closed, the central duct (36) abuts and against the second lid (12).

18. The unit of any of the preceding claims wherein said housing (2) comprises
an inner wall (92a) and an outer wall (92b) located at a distance from each other and
a cavity (94) arranged between the inner wall (92a) and the outer wall (92b),
and in particular wherein the inner wall (92a) and the outer wall (92b) are stainless steel sheets.

19. The unit of any of the preceding claims further comprising a valve (64) selectively blocking a water passage through the unit.

20. The unit of claim 19 wherein the valve (64) is arranged in a flow path between the tap interface (14) and the pre-filter (30).

21. The unit of any of the claims 19 or 20 wherein the pre-filter (30) and the post-filter (34) are axially located between the membrane filter (32) and the valve (64).

22. The unit of any of the preceding claims
wherein said pre-filter (30) comprises a filter of the group of activated carbon filters, zeolite filters, UV filters, mechanical filters having filter pores of a diameter of less than 100 µm, micro-filters, and ultra-filtration filters, and in particular wherein the pre-filter (30) comprises a filter of the group of activated carbon filters, micro-filters, and ultra-filtration filters, and/or
wherein said post-filter (34) comprises a filter of the group of activated carbon filters, zeolite filters, UV filters, a ceramic filter, a deionization filter, and a remineralization unit, and in particular wherein the post-filter (34) comprises a filter of the group of activated carbon filters, zeolite filters, and ceramic filters.

23. The unit of any of the preceding claims
wherein the membrane filter (32) has a partially permeable membrane, with the membrane permeable to water but withholding at least some of the contaminants that may be solved in water, and/or
wherein the membrane filter (32) comprises a reverse-osmosis filter and/or a nanofilter.

24. The unit of any of the preceding claims wherein the tap interface (14) comprises
a first part (14a) mounted to the housing (2) and
a second part (14b) having a threading (98),
wherein said first and said second part (14a, 14b) form a water tight bayonet mount (96).

25. The unit of any of the preceding claims wherein a first end (36c) of the central duct (36) extends axially into post-filter 34, wherein, at the first end (36c), the central duct (36) is axially closed and comprises radial outlet openings (36b)

26. Use of the water purification unit of any of the preceding claims comprising the steps of
connecting the tap interface (14) to a tap and
sequentially feeding water from the tap first through the pre-filter (30), then through the membrane filter (32), and then through the post-filter (34).

## Patentansprüche

1. Wasserreinigungs-Vorrichtung, umfassend
ein Gehäuse (2),
eine Wasserhahn-Schnittstelle (14), die dazu ausgelegt ist, an einen Wasserhahn angeschlossen zu werden und von diesem Wasser aufzunehmen,
einen Membranfilter (32), der um einen zentralen Kanal (36) angeordnet ist, der sich entlang einer Filterachse (8) erstreckt,
einen Vorfilter (30), der vor dem Membranfilter (32) angeordnet ist, und
einen Nachfilter (34), der hinter dem Membranfilter (32) angeordnet ist, und
einen Auslassanschluss (20),
wobei die Reinigungseinheit so ausgelegt ist, dass sie Wasser zunächst durch den Membranfilter und anschliessend durch den Nachfilter leitet,
**dadurch gekennzeichnet, dass**
der Membranfilter (32), der Vorfilter (30) und der Nachfilter (34) in dem Gehäuse (2) angeordnet sind,
sich der zentrale Kanal (36) vom Membranfilter (32) zum Nachfilter (34) erstreckt, und
der Nachfilter (34) geometrisch zwischen der Wasserhahn-Schnittstelle (14) und dem Membranfilter (32) angeordnet ist.

2. Vorrichtung nach Anspruch 1, wobei mindestens zwei der Filter (30, 32, 34) an unterschiedlichen Stellen entlang der Filterachse (8) angeordnet sind, so dass sich die beiden Filter (30, 32, 34) entlang der Filterachse (8) gar nicht oder nur teilweise überlappen und beide die Filterachse (8) umschliessen.

3. Vorrichtung nach Anspruch 2, wobei der Vorfilter (30), der Nachfilter (34) und der Membranfilter (32) an unterschiedlichen Stellen entlang der Filterachse (8) angeordnet sind, so dass sich der Vorfilter (30), der Nachfilter (34) und der Membranfilter (32) sich entlang der Filterachse (8) gar nicht oder nur teilweise überlappen und sie alle die Filterachse (8) umgeben.

4. Vorrichtung nach Anspruch 3, wobei der Vorfilter (30) geometrisch zwischen dem Membranfilter (32) und dem Nachfilter (34) angeordnet ist.

5. Vorrichtung nach einem der vorstehenden Ansprüche, wobei sich der zentrale Kanal (36) in den Nachfilter (34) erstreckt.

6. Vorrichtung nach einem der vorstehenden Ansprüche, wobei der Vorfilter (30) um den zentralen Kanal (36) herum angeordnet ist.

7. Vorrichtung nach einem der vorstehenden Ansprüche, wobei der Nachfilter (34) geometrisch zwischen der Wasserhahn-Schnittstelle (14) und dem Vorfilter (30) angeordnet ist.

8. Vorrichtung nach einem der vorstehenden Ansprüche, wobei das Gehäuse zylindrisch und konzentrisch zur Filterachse (8) ist.

9. Vorrichtung nach einem der vorstehenden Ansprüche, wobei sich das Gehäuse (2) entlang der Filterachse (8) erstreckt und ein erstes und ein zweites gegenüberliegendes Ende aufweist,
wobei die Einheit ferner einen ersten Deckel (10), der das erste Ende verschliesst, und/oder einen zweiten Deckel (12), der das zweite Ende verschliesst, umfasst,
wobei der erste und/oder der zweite Deckel (10, 12) abnehmbar am Gehäuse (2) angebracht ist/sind.

10. Vorrichtung nach Anspruch 9, wobei der/die Deckel (10, 12) in die Enden des Gehäuses (2) eingesetzt ist/sind.

11. Vorrichtung nach einem der Ansprüche 1 bis 8, wobei sich das Gehäuse (2) entlang der Filterachse (8) erstreckt und ein erstes und ein zweites gegenüberliegendes Ende aufweist, und wobei das Gehäuse (2)
einen ersten Deckel (10) am ersten Ende und einen zweiten Deckel (12) am zweiten Ende,
wobei der erste Deckel (10) und der zweite Deckel (12) direkt miteinander verbunden sind,
und insbesondere wobei der erste Deckel (10) und der zweite Deckel (12) becherförmig sind.

12. Vorrichtung nach Anspruch 11, wobei sich der erste Deckel (10) und der zweite Deckel (12) an einer Stelle (90) treffen und wobei ein Verhältnis D1:D2 zwischen 0.25 und 4.0 liegt, wobei D1 ein Abstand zwischen dem ersten Ende (4) und der Stelle (90) ist und D2 ein Abstand zwischen dem zweiten Ende (6) und der Stelle (90).

13. Vorrichtung nach einem der Ansprüche 9 bis 12, wobei nach dem Entfernen eines oder beider Deckel (10, 12) alle Filter axial aus dem Gehäuse (2) entnommen werden können.

14. Vorrichtung nach einem der Ansprüche 9 bis 13, wobei die Wasserhahn-Schnittstelle (14) und der Auslassanschluss (20) im oder am ersten Deckel (10) angeordnet sind.

15. Vorrichtung nach einem der Ansprüche 9 bis 14, ferner umfassend ein Vorfiltermodul (40), das den Vorfilter (30) umfasst, und ein Nachfiltermodul (46), das den Nachfilter (34) umfasst, wobei bei geschlossenem Deckel / geschlossenen Deckeln (10, 12) ein erstes der Module an den ersten Deckel (10) und/oder an ein Ende des Gehäuses (2) anliegt.

16. Vorrichtung nach Anspruch 15, wobei ein zweites der Module zwischen dem ersten Modul und dem Membranfilter (32) angeordnet ist.

17. Vorrichtung nach einem der Ansprüche 9 bis 16, wobei bei geschlossenen Deckeln (10, 12) der zentrale Kanal (36) an dem zweiten Deckel (12) anliegt.

18. Vorrichtung nach einem der vorstehenden Ansprüche, wobei das Gehäuse (2) umfasst
eine Innenwand (92a) und eine Aussenwand (92b), die in einem Abstand voneinander angeordnet sind, sowie
einen Hohlraum (94), der zwischen der Innenwand (92a) und der Aussenwand (92b) angeordnet ist,
und insbesondere wobei die Innenwand (92a) und die Aussenwand (92b) aus Edelstahlblechen bestehen.

19. Vorrichtung nach einem der vorstehenden Ansprüche, die ferner ein Ventil (64) umfasst, das einen Wasserdurchfluss durch die Vorrichtung selektiv sperrt.

20. Vorrichtung nach Anspruch 19, wobei das Ventil (64) in einem Strömungsweg zwischen der Wasserhahn-Schnittstelle (14) und dem Vorfilter (30) angeordnet ist.

21. Vorrichtung nach einem der Ansprüche 19 oder 20, wobei der Vorfilter (30) und der Nachfilter (34) axial zwischen dem Membranfilter (32) und dem Ventil (64) angeordnet sind.

22. Vorrichtung nach einem der vorstehenden Ansprüche
wobei der Vorfilter (30) einen Filter aus der Gruppe der Aktivkohlefilter, Zeolithfilter, UV-Filter, mechanischen Filter mit Filterporen von weniger als 100µ m Durchmesser, Mikrofilter und Ultrafiltrationsfilter umfasst, und insbesondere wobei der Vorfilter (30) einen Filter aus der Gruppe der Aktivkohlefilter, Mikrofilter und Ultrafiltrationsfilter umfasst, und/oder
wobei der Nachfilter (34) einen Filter aus der Gruppe der Aktivkohlefilter, Zeolithfilter, UV-Filter, Keramikfilter, Entionisierungsfilter und einer Remineralisierungseinheit umfasst, und insbesondere wobei der Nachfilter (34) einen Filter aus der Gruppe der Aktivkohlefilter, Zeolithfilter und Keramikfilter umfasst.

23. Vorrichtung nach einem der vorstehenden Ansprüche
wobei der Membranfilter (32) eine teilweise durchlässige Membran aufweist, wobei die Membran für Wasser durchlässig ist, jedoch zumindest einen Teil der in Wasser gelösten Verunreinigungen zurückhält, und/oder
wobei der Membranfilter (32) einen Umkehrosmosefilter und/oder einen Nanofilter umfasst.

24. Vorrichtung nach einem der vorstehenden Ansprüche, wobei die Wasserhahn-Schnittstelle (14) umfasst
einen ersten Teil (14a), der am Gehäuse (2) angebracht ist, und
einen zweiten Teil (14b) mit einem Gewinde (98),
wobei der erste und der zweite Teil (14a, 14b) eine wasserdichte Bajonettverbindung (96) bilden.

25. Vorrichtung nach einem der vorstehenden Ansprüche, wobei sich ein erstes Ende (36c) des zentralen Kanals (36) axial in den Nachfilter (34) erstreckt, wobei der zentrale Kanal (36) am ersten Ende (36c) axial verschlossen ist und radiale Auslassöffnungen (36b) aufweist

26. Verwendung der Wasserreinigungs-Vorrichtung nach einem der vorstehenden Ansprüche, umfassend die Schritte
Anschliessen der Wasserhahn-Schnittstelle (14) an einen Wasserhahn und
Leiten des Wassers aus dem Wasserhahn nacheinander zunächst durch den Vorfilter (30), dann durch den Membranfilter (32) und anschliessend durch den Nachfilter (34).

## Revendications

1. Une unité de purification d'eau, comprenant
un boîtier (2),
une interface de robinet (14) conçue pour être raccordée à un robinet et pour recevoir de l'eau de celui-ci,
un filtre à membrane (32) disposé autour d'un canal central (36) s'étendant le long d'un axe de filtration (8),
un préfiltre (30) disposé en amont du filtre à membrane (32), et
un postfiltre (34) disposé en aval du filtre à membrane (32), et
un raccord de sortie (20),
dans laquelle l'unité de purification est conçue pour faire passer l'eau d'abord à travers le filtre à membrane, puis à travers le post-filtre,
**caractérisée en ce que**
le filtre à membrane (32), le préfiltre (30) et le postfiltre (34) sont disposés dans le boîtier (2),
ledit canal central (36) s'étend du filtre à membrane (32) au postfiltre (34), et
ledit postfiltre (34) est disposé géométriquement entre l'interface de robinet (14) et le filtre à membrane (32).

2. L'unité selon la revendication 1, dans laquelle au moins deux des filtres (30, 32, 34) sont disposés à des emplacements différents le long de l'axe de filtration (8), de sorte que les deux filtres (30, 32, 34) ne se chevauchent pas du tout ou seulement partiellement le long de l'axe de filtration (8) et entourent tous deux l'axe de filtration (8).

3. L'unité selon la revendication 2, dans laquelle le préfiltre (30), le postfiltre (34) et le filtre à membrane (32) sont disposés à différents emplacements le long de l'axe de filtration (8), de sorte que le préfiltre (30), le postfiltre (34) et le filtre à membrane (32) ne se chevauchent pas ou ne se chevauchent que partiellement le long de l'axe de filtration (8) et qu'ils entourent tous l'axe de filtration (8).

4. L'unité selon la revendication 3, dans laquelle le préfiltre (30) est disposé géométriquement entre le filtre à membrane (32) et le postfiltre (34).

5. L'unité selon l'une des revendications précédentes, dans laquelle le canal central (36) s'étend dans le post-filtre (34).

6. L'unité selon l'une des revendications précédentes, dans laquelle quel le préfiltre (30) est disposé autour du canal central (36).

7. L'unité selon l'une des revendications précédentes, dans laquelle le postfiltre (34) est disposé géométriquement entre l'interface de robinet (14) et le préfiltre (30).

8. L'unité selon l'une des revendications précédentes, dans laquelle le boîtier est cylindrique et concentrique à l'axe du filtre (8).

9. L'unité selon l'une des revendications précédentes, dans laquelle le boîtier (2) s'étend le long de l'axe du filtre (8) et présente une première et une deuxième extrémité opposée,
dans laquelle l'ensemble comprend en outre un premier couvercle (10) qui ferme la première extrémité, et/ou un deuxième couvercle (12) qui ferme la deuxième extrémité,
dans laquelle le premier et/ou le deuxième couvercle (10, 12) est/sont monté(s) de manière amovible sur le boîtier (2).

10. L'unité selon la revendication 9, dans laquelle le ou les couvercles (10, 12) sont insérés dans les extrémités du boîtier (2).

11. L'unité selon l'une des revendications 1 à 8, dans laquelle le boîtier (2) s'étend le long de l'axe du filtre (8) et présente une première et une deuxième extrémité opposée, et dans lequel le boîtier (2) comprend
un premier couvercle (10) à la première extrémité et un deuxième couvercle (12) à la deuxième extrémité,
dans laquelle le premier couvercle (10) et le deuxième couvercle (12) sont directement reliés l'un à l'autre,
et en particulier dans laquelle le premier couvercle (10) et le deuxième couvercle (12) sont en forme de coupelle.

12. L'unité selon la revendication 11, dans laquelle le premier couvercle (10) et le deuxième couvercle (12) se rejoignent en un point (90) et dans lequel un rapport D1:D2 est compris entre 0,25 et 4,0, D1 étant une distance entre la première extrémité (4) et le point (90) et D2 une distance entre la deuxième extrémité (6) et le point (90).

13. L'unité selon l'une des revendications 9 à 12, dans laquelle, après retrait d'un ou des deux couvercles (10, 12), tous les filtres peuvent être retirés axialement du boîtier (2).

14. L'unité selon l'une des revendications 9 à 13, dans laquelle l'interface de robinet (14) et le raccord de sortie (20) sont disposés dans ou sur le premier couvercle (10).

15. L'unité selon l'une des revendications 9 à 14, comprenant en outre un module de préfiltration (40) qui comprend le préfiltre (30) et un module de postfiltration (46) qui comprend le postfiltre (34), dans lequel, lorsque le ou les couvercles sont fermés (10, 12), un premier des modules repose contre le premier couvercle (10) et/ou contre une extrémité du boîtier (2).

16. L'unité selon la revendication 15, dans laquelle un deuxième des modules est disposé entre le premier module et le filtre à membrane (32).

17. L'unité selon l'une des revendications 9 à 16, dans laquelle, lorsque les couvercles (10, 12) sont fermés, le canal central (36) est en appui contre le deuxième couvercle (12).

18. L'unité selon l'une des revendications précédentes, dans laquelle le boîtier (2) comprend
une paroi intérieure (92a) et une paroi extérieure (92b) qui sont espacées l'une de l'autre, ainsi que
une cavité (94) disposée entre la paroi intérieure (92a) et la paroi extérieure (92b),
et en particulier dans lequel la paroi intérieure (92a) et la paroi extérieure (92b) sont constituées de tôles en acier inoxydable.

19. L'unité selon l'une des revendications précédentes, comprenant en outre une vanne (64) qui bloque de manière sélective le passage de l'eau à travers le dispositif.

20. L'unité selon la revendication 19, dans laquelle la vanne (64) est disposée dans un trajet d'écoulement entre le raccord de robinet (14) et le préfiltre (30).

21. L'unité selon l'une des revendications 19 ou 20, dans laquelle le préfiltre (30) et le postfiltre (34) sont disposés axialement entre le filtre à membrane (32) et la vanne (64).

22. L'unité selon l'une des revendications précédentes,
dans laquelle le préfiltre (30) comprend un filtre choisi parmi le groupe comprenant les filtres à charbon actif, les filtres à zéolite, les filtres UV, les filtres mécaniques dont les pores ont un diamètre inférieur à 100 um, les microfiltres et les filtres d'ultrafiltration, et en particulier dans lequel le préfiltre (30) comprend un filtre choisi parmi le groupe comprenant les filtres à charbon actif, les microfiltres et les filtres d'ultrafiltration, et/ou
dans laquelle le postfiltre (34) comprend un filtre choisi parmi le groupe comprenant les filtres à charbon actif, les filtres à zéolite, les filtres UV, les filtres céramiques, les filtres de déionisation et une unité de reminéralisation, et en particulier dans lequel le filtre secondaire (34) comprend un filtre choisi parmi le groupe comprenant les filtres à charbon actif, les filtres à zéolite et les filtres céramiques.

23. L'unité selon l'une des revendications précédentes,
dans laquelle le filtre à membrane (32) comporte une membrane partiellement perméable, dans laquelle ladite membrane est perméable à l'eau mais retient au moins une partie des impuretés dissoutes dans l'eau, et/ou
dans laquelle le filtre à membrane (32) comprend un filtre à osmose inverse et/ou un nanofiltre.

24. L'unité selon l'une des revendications précédentes, dans laquelle l'interface de robinet (14) comprend
une première partie (14a) fixée au boîtier (2), et
une deuxième partie (14b) pourvue d'un filetage (98),
les première et deuxième parties (14a, 14b) formant un raccord à baïonnette étanche (96).

25. L'unité selon l'une des revendications précédentes, dans laquelle une première extrémité (36c) du canal central (36) s'étend axialement dans le postfiltre (34), dans laquelle le canal central (36) est fermé axialement à la première extrémité (36c) et comporte des orifices de sortie radiaux (36b)

26. L'unité du dispositif de purification d'eau selon l'une des revendications précédentes, comprenant les étapes consistant à
raccorder l'interface de robinet (14) à un robinet et
faire passer l'eau provenant du robinet successivement d'abord à travers le préfiltre (30), puis à travers le filtre à membrane (32) et enfin à travers le postfiltre (34).
